# EUROPÄISCHE PATENTANMELDUNG

(11) **EP 1 197 285 A2**
(43) Veröffentlichungstag der Anmeldung: **17.04.2002**
(21) Anmeldenummer: 01123530.6
(22) Anmeldetag: 29.09.2001
(51) Int. Cl.: B23K 9/067

(54) **Elektrische Schaltungsanordnung zur Erzeugung von Zündimpulsen für Schweisslichtbögen**

(30) Priorität: 13.10.2000 DE 10050923
(71) Anmelder: Lorch Schweisstechnik GmbH, 71549 Auenwald (DE)
(72) Erfinder: Jaeschke, Birger, 71522 Backnang (DE)
(74) Vertreter: Patentanwalts-Partnerschaft Rotermund + Pfusch

(57) **Zusammenfassung**

Zur Erzeugung der Zündimpulse wird ein Zündkondensator (8) stoßartig entladen. Der steuerbare Ladezustand des Zündkondensators (8) wird indirekt über eine Messung der Zeitdauer des dem Zündkondensator von einer Ladestromquelle (7) zugeleiteten Ladestromes erfaßt. Dadurch läßt sich in einfacher Weise eine galvanische Trennung zwischen dem Ladestromkreis und einer Steuerung (4,15) zur parameterabhängigen Abschaltung der Ladestromquelle erreichen.

## Beschreibung

Die Erfindung betrifft eine elektrische Schaltungsanordnung zur Erzeugung von Zündimpulsen für Schweißlichtbögen, insbesondere beim Wolfram-Inertgas-Schweißen (WIG-Schweißen), mit
- einer Zündkapazität, insbesondere einem Zündkondensator,
- einer damit über einen Ladestromkreis elektrisch verbundenen, durch Abschaltsignal abschaltbaren bzw. auf vernachlässigbaren Ausgangsstrom abregelbaren Ladestromquelle, die bei fehlendem Abschaltsignal und/oder bei Unterschreitung eines Schwellwertes der elektrischen Spannung der Zündkapazität einen Ladestrom zur Zündkapazität leitet,
- einer durch Auslösesignal auslösbaren Entladeschaltung, über die die Zündkapazität unter Einkopplung ihres Entladestromes in einen Schweißausgang eines Schweißgerätes entladbar ist, und
- einer gegenüber Rückwirkungen vom Ladestromkreis bzw. Entladestrom geschützten bzw. sicheren Steuerung, die in Abhängigkeit von vorgegebenen Parametern eines Schweißprozesses das Auslösesignal erzeugt.

Eine derartige Schaltungsanordnung ist Gegenstand der DE 198 44 273 A1. Die dort dargestellte Schaltung besitzt als Ladestromkreis einen durch Gleichrichter ständig nachgeladenen Ladekondensator mit nachgeschalteter Sperrwandlerschaltung, über die ein Zündkondensator mit dem Ladekondensator verbindbar ist. Die durch Thyristoren gebildete Entladeschaltung wird mittels eines Triggerkreises gesteuert, der die elektrischen Polaritäten eines Schweißstromkreises erfaßt und bei Polaritätsänderungen ein Auslösesignal erzeugt und damit entsprechend der Richtung der Polaritätsänderung vorgegebene Thyristoren leitend schaltet. Der Triggerkreis ist des weiteren über einen Optokoppler mit einem Zeitkreis verbunden, dessen Ausgang mit einem Eingang einer als integrierte Schaltung ausgebildeten Steuerung der Sperrwandlerschaltung verbunden ist. Der Zeitkreis erzeugt synchron zum Auslösesignal ein Abschaltsignal, welches während einer durch die Charakteristik des Zeitkreises vorgegebenen Zeitspanne aufrechterhalten bleibt. Solange dieses Abschaltsignal vorliegt, hält die Sperrwandlerschaltung den Zündkondensator vom Ladekondensator elektrisch getrennt. Auf diese Weise wird sichergestellt, daß der Zündkondensator erst dann erneut aufgeladen werden kann, wenn die vom jeweiligen Auslösesignal leitend geschalteten Thyristoren wieder ihren Sperrzustand erreicht haben.

Bei einer aus der DE 30 49 133 C2 bekannten Schaltungsanordnung zur Erzeugung von Zündimpulsen für Schweißlichtbögen wird der Zündkondensator über eine Gleichrichterschaltung mit steuerbarem Widerstand aufgeladen. Die Entladung des Zündkondensators erfolgt über eine Brückenschaltung mit vier durch Thyristoren gebildeten Schalter. Diese werden durch Triggerimpulse einer von der Schweißwechselspannung gespeisten Triggerschaltung betätigt. Dabei wird ein Ladekondensator der Triggerschaltung über einen Ladewiderstand bei jeder Halbwelle der Schweißwechselspannung aufgeladen. Der Entladekreis dieses Ladekondensators enthält eine Triggerdiode, die jeweils bei Erreichen einer vorgegebenen Ladespannung durchschaltet und die Entladung des Ladekondensators einleitet. Mittels Steuerimpulsübertrager werden dann synchron mit der Schweißwechselspannung Triggerimpulse auf jeweils vorgegebene Thyristoren übertragen, derart, daß die Primärwicklung eines Zündimpulsübertragers in der einen oder anderen Richtung vom Strom des sich entladenden Zündkondensators durchsetzt wird und Zündimpulse der einen oder anderen Polarität auf die Sekundärwicklung des Zündimpulsübertragers induziert werden.

Aufgabe der Erfindung ist es nun, eine verbesserte Steuerung für die Zündimpulse zu schaffen.

Diese Aufgabe wird bei einer Schaltungsanordnung der eingangs angegebenen Art dadurch gelöst, daß die Steuerung zu von den Parametern des Schweißprozesses abhängigen Zeitpunkten nach dem Auslösesignal und/oder dem Einsetzen des Ladestromes, spätestens bei Erzeugung des nächsten Auslösesignales, zur Beendigung der Aufladung der Zündkapazität das Abschaltsignal einschaltet.

Die Erfindung beruht auf dem allgemeinen Gedanken, die Aufladung der Zündkapazität unabhängig vom Zeitpunkt des nachfolgenden Auslösesignales zur Entladung der Zündkapazität beenden zu können, und zwar in Abhängigkeit von Parametern des Schweißprozesse. Im Ergebnis werden also Leistung bzw. Energie der Zündimpulse parameterabhängig gesteuert.

Mit der Erfindung ist es insbesondere möglich, den Ladezustand der Zündkapazität über die Zeitdauer bzw. Einschaltzeit des Ladestromes, gegebenenfalls unter Berücksichtigung der Betriebscharakteristik der Ladestromquelle, zu bestimmen.

Beispielsweise ist das Zeitinterwall zwischen Auslösesignal und Abschaltsignal ein Maß für den Ladezustand der Zündkapazität. Zusätzlich oder alternativ können mit einer äußerst einfachen Sensorik, z.B. einem optoelektrischen Wandler, zwei unterschiedliche Signale für vorhandenen bzw. nicht vorhandenen Ladestrom erzeugt werden, so daß sich die Einschaltzeit des Ladestromes direkt erfassen läßt und das Abschaltsignal nach einem parameterabhängigen Zeitintervall nach Einsetzen des Ladestromes erzeugt werden kann.

Der gegebenenfalls bei abgeregelter Ladestromquelle noch auftretende geringe bzw. verschwindende Ausgangsstrom der Ladestromquelle kann im Vergleich zum Ladestrom vernachlässigt werden, d.h. dieser Ausgangsstrom verändert den Ladezustand der Zündkapazität praktisch nicht und wird vom optoelektrischen Wandler nicht erfaßt.

Vorzugsweise sind der Ladestromkreis und die Steuerung voneinander entfernt bzw. voneinander galvanisch getrennt angeordnet, so daß trotz gegebenenfalls extrem hoher Spannung der Zündkapazität und trotz unvermeidlicher hochfrequenter Impulsamplituden bei Entladung der Zündkapazität ohne weiteres eine für niedrige elektrische Belastungen ausgelegte Steuerschaltung, insbesondere eine digitale Steuerschaltung mit sehr geringer elektrischer Leistung, eingesetzt werden kann, womit der zusätzliche Vorteil erzielt wird, daß übliche Prozessoren mit hoher Rechnerleistung und vielfältiger Programmierbarkeit zur Steuerung verwendbar sind.

Gemäß einer besonders bevorzugten Ausführungsform der Erfindung schaltet bzw. regelt die Ladestromquelle bei Erreichen eines oberen Schwellwertes der elektrischen Spannung der Zündkapazität den Ladestrom durch automatische Selbstabschaltung bzw. Selbstabregelung ab.

Damit besteht die vorteilhafte Möglichkeit, daß die Steuerung jeweils bei Betriebsbeginn bzw. vorgebbaren Betriebsphasen vor Erzeugung eines Abschaltsignales die Zeit bis zur automatischen Selbstabschaltung der Ladestromquelle als maximale Ladezeit registriert bzw. speichert und nachfolgend die auf ein Einsetzen des Ladestromes folgenden Abschaltsignale jeweils nach einem Zeitintervall erzeugt, welches gegenüber der maximalen Ladezeit um einen durch die überwachten Parameter des Schweißprozesses vorgebbaren Anteil verkürzt ist. Auf diese Weise wird eine gute Adaption an die jeweiligen Betriebsverhältnisse und die Leistungsfähigkeit der Ladestromquelle erreicht.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung näher beschrieben wird.

Dabei zeigt
- Fig. 1: einen schematisierten Schaltplan der erfindungsgemäßen Schaltungsanordnung mit Steuerung und zugehörigem Schweißgerät,
- Fig. 2: ein Beispiel einer getakteten Ladestromquelle und
- Fig. 3: ein Beispiel einer Regelung der Ladestromquelle.

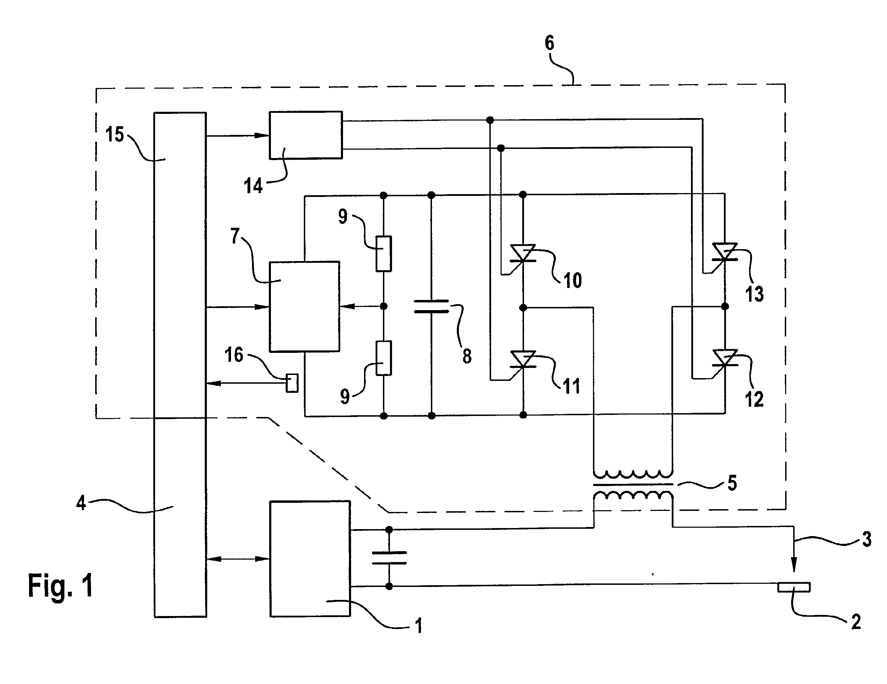

Gemäß der Fig. 1 ist eine grundsätzlich bekannte, steuerbare Schweißstromquelle 1 über einen Schweißausgang mit einem Werkstück 2 und über einen weiteren Schweißausgang mit einer Schweißelektrode 3 verbunden bzw. verbindbar.

Der Schweißstromquelle 1 ist eine Steuereinheit 4 zugeordnet, die verschiedene Parameter des Schweißprozesses, insbesondere die Spannung zwischen den Schweißausgängen der Schweißstromquelle sowie die Stärke des jeweiligen Schweißstromes, überwachen und regeln kann. Außerdem steuert die Steuereinheit 4 beim Wechselstromschweißen die Wechselstromfrequenz, welche gegebenenfalls auch parameterabhängig veränderbar ist, sowie den Zeitpunkt und das Maß der Stromamplitude.

In der Verbindung zwischen Schweißstromquelle 1 und Schweißelektrode 3 ist die Sekundärseite eines Zündimpulsübertragers eingesetzt, der einer Schaltungsanordnung 6 zur Erzeugung von Zündimpulsen zugeordnet ist.

Diese Schaltungsanordnung 6 besitzt eine durch ein Abschaltsignal abschaltbare Ladestromquelle 7, welche vorzugsweise als Konstantstromquelle ausgebildet ist und einen mit ihr ausgangsseitig verbundenen Zündkondensator 8 auf eine sehr hohe elektrische Spannung aufzuladen vermag.

Die Ladestromquelle 7 ist derart ausgebildet, daß sie den zum Zündkondensator 8 fließenden Ladestrom automatisch abschaltet, sobald eine vorgegebene maximale Ladespannung erreicht ist.

Zur Erfassung der Ladespannung ist im zeichnerisch dargestellten Beispiel parallel zum Zündkondensator 8 eine sehr hochohmige Widerstandsstrecke mit zwei Widerständen 9 angeordnet, die unterschiedlich bemessen sein können. Aufgrund des extrem hohen Widerstandes der Widerstandsstrecke kann diese nur von einem vernachlässigbaren Strom durchsetzt werden. Zwischen den Widerständen 9 ist eine im Vergleich zur Spannung des Zündkondensators 8 verminderte Spannung abgreifbar, die sich analog zur elektrischen Spannung des Zündkondensators 8 ändert und von der Ladestromquelle 7 als Steuersignal für die vorgenannte Selbstabschaltung der Ladestromquelle 7 bei Erreichen der vorgesehenen Maximalspannung des Zündkondensators 8 genutzt wird.

Des weiteren ist parallel zum Zündkondensator 8 eine Brükkenschaltung mit vier Thyristoren 10 bis 13 angeordnet, die jeweils paarweise in zwei gleichen Parallelzweigen der Brükkenschaltung in gleicher Durchlaßrichtung in Reihe geschaltet sind. Zwischen den Thyristoren 10 und 11 einerseits und den Thyristoren 12 und 13 andererseits ist die Primärseite des Zündimpulsübertragers 5 angeschlossen.

Zur Steuerung der Thyristoren 10 bis 13 dient eine Triggerschaltung 14, die mit entsprechenden Triggerimpulsen entweder die Thyristoren 10 und 12 oder die Thyristoren 11 und 13 aus dem normalen Sperrzustand (entsprechend einem geöffneten Schalter) in den leitenden Zustand (entsprechend einem geschlossenen Schalter) umschalten kann.

Der Ladestromquelle 7 sowie der Triggerschaltung 14 ist eine Steuerung 15 zugeordnet, die mit der Steuereinheit 4 der Schweißstromquelle 1 kommuniziert und damit wesentliche Parameter des Schweißprozesses "kennt", insbesondere die jeweilige elektrische Polarität der Schweißausgänge der Schweißstromquelle 1 bzw. der Stromrichtung des Schweißstromes.

Grundsätzlich kann die Steuerung 15 die wesentlichen Parameter des Schweißprozesses auch über eine gesonderte Sensorik "erfahren".

Die Steuerung 15 steuert die Triggerschaltung 14, d.h. die Steuerung 15 bestimmt Zeit und Art der von der Triggerschaltung 14 abgesetzten Triggerimpulse. Im Ergebnis bestimmt also die Steuerung 15, welche der Thyristoren 10 bis 13 wann in den leitenden Zustand geschaltet werden.

Des weiteren kann die Ladestromquelle 7 von der Steuerung 15 durch ein praktisch leistungsfreies Steuersignal abgeschaltet bzw. abgeregelt werden. Zu diesem Zweck besitzt die Ladestromquelle 7 einen entsprechenden Steuereingang. Falls ein solches Abschaltsignal vorliegt, schaltet bzw. regelt sich die Ladestromquelle 7 ab bzw. bleibt abgeregelt bzw. abgeschaltet. Falls kein Abschaltsignal vorliegt, erzeugt die Ladestromquelle 7 einen den Zündkondensator 8 aufladenden Ladestrom, vorausgesetzt, daß die maximale Ladespannung des Zündkondensators 8 noch nicht erreicht ist.

Durch einen Sensor, beispielsweise einen optoelektrischen Wandler 16, welcher eine galvanische Trennung zwischen der Steuerung 15 und dem Ladestromkreis des Zündkondensators 8 gewährleistet, erfaßt die Steuerung 15, ob ein Ladestrom zum Zündkondensator 8 fließt oder nicht, wobei im Zustand "kein Ladestrom" gegebenenfalls von der Ladestromquelle 7 noch ein sehr geringer bzw. verschwindender, vom Wandler 16 nicht erfaßter Ausgangsstrom erzeugt werden kann.

Mittels eines internen Taktgebers kann die Steuerung 15 die zeitliche Dauer des dem Zündkondensator 8 nach einer Entladung zugeführten Ladestromes erfassen und "kennt" damit den Ladezustand des Zündkondensators 8. Wenn die Ladestromquelle 7 die Charakteristik einer Konstantstromquelle hat, erhöht sich die Ladung des Zündkondensators 8 linear mit der Ladezeit. Falls die Ladestromquelle 7 eine von einer Konstantstromquelle abweichende Charakteristik aufweist, muß die Steuerung 15 diese Charakteristik berücksichtigen, beispielsweise durch zeitabhängige Gewichtungsfaktoren, wenn der Ladezustand des Zündkondensators 8 exakt erfaßt werden soll.

Zu vorgegebenen Betriebsphasen, beispielsweise bei Betriebsbeginn, kann vorgesehen sein, daß die Ladestromquelle 7 den Zündkondensator 8 immer bis zur Selbstabschaltung bzw. Selbstabregelung der Ladestromquelle 7 auflädt. Auf diese Weise kann die Steuerung 15 die für die maximale Aufladung des Zündkondensators 8 benötigte Zeitspanne ermitteln, so daß nachfolgend bei kürzeren Ladezeiten, wie sie bei entsprechend früher Erzeugung der Abschaltsignale der Steuerung 15 auftreten, das Verhältnis der tatsächlich erreichten Ladung zur maximalen Ladung analog dem Verhältnis der tatsächlichen Ladezeit und der für eine maximale Ladung benötigten Ladezeit ist.

Die dargestellte Anordnung arbeitet wie folgt:

Bei Betriebsbeginn wird der Zündkondensator 8 von der Ladestromquelle 7 geladen. Die Steuerung 15 erkennt Zeitpunkt und Polarität eines zu erzeugenden Zündimpulses durch Kommunikation mit der Steuereinheit 4. Sobald ein Zündimpuls erzeugt werden soll, steuert die Steuerung 15 die Triggerschaltung 14 mit einem entsprechenden Auslösesignal an, derart, daß entweder die Thyristoren 10 und 12 oder die Thyristoren 11 und 13 in den leitenden Zustand gebracht werden. Dies führt dazu, daß sich der Zündkondensator 8 entlädt, wobei der Entladestrom in Abhängigkeit von den jeweils leitenden Thyristoren 10 und 12 bzw. 11 und 13 in der einen oder anderen Richtung die Primärseite des Zündimpulsübertragers 5 durchsetzt. Dementsprechend wird in die Sekundärseite des Zündimpulsübertragers 5 ein Zündimpuls mit der einen oder der anderen Polarität induziert.

Während der Entladung des Zündkondensators 8 erzeugt die Steuerung 15 das Abschaltsignal für die Ladestromquelle 7, um zu verhindern, daß die Ladestromquelle 7 zusätzlich zum Zündkondensator 8 einen die Primärseite des Zündimpulsübertragers 5 durchsetzenden größeren Strom erzeugen kann. Durch die Abschaltung der Ladestromquelle 7 wird nach Entladung des Zündkondensators 8 mit Sicherheit gewährleistet, daß die zuvor durch Triggersignale leitend geschalteten Thyristoren 10 und 12 bzw. 11 und 13 selbsttätig in ihren Sperrzustand übergehen.

Für einen nachfolgenden Zündimpuls wird der Zündkondensator 8 erneut geladen. Dafür wird das Abschaltsignal ausgeschaltet bzw. ausgeschaltet gelassen und nach parameterabhängig vorgebbarer Zeit wieder eingeschaltet, gegebenenfalls erst bei Erzeugung eines Auslösesignales für die Triggerschaltung 14.

Durch die galvanische Entkopplung der Steuerung 15 vom Ladestromkreis des Zündkondensators 8 können die gegebenenfalls extrem hohen Ladespannungen des Zündkondensators 8 sowie die hochfrequenten Impulsamplituden bei Auslösung des Zündimpulses bzw. Entladestromes des Zündkondensators 8 praktisch keinerlei Rückwirkungen auf die Steuerung 15 ausüben. Im Ergebnis ist damit gewährleistet, daß die Steuerung 15 als mikroelektronische digitale Schaltung ausgebildet sein kann, wobei für den Schaltungsaufbau ein oder mehrere Prozessoren mit hohen Operationsgeschwindigkeiten und umfangreicher Programmierbarkeit einsetzbar sind.

Gegebenenfalls kann die Steuerung 15 auch Teil der Steuereinheit 4 der Schweißstromquelle sein.

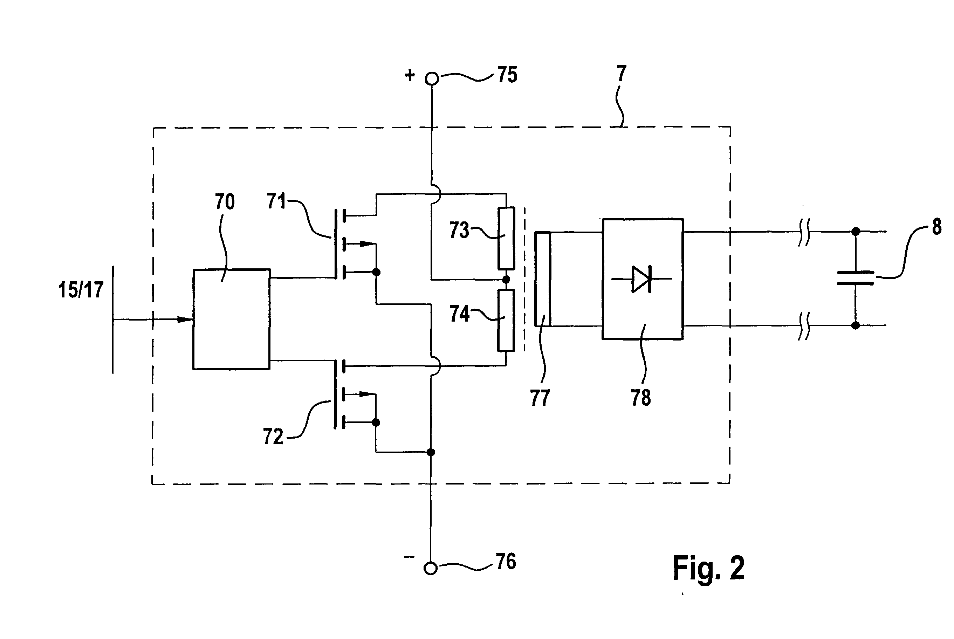

Die in Fig. 2 beispielhaft dargestellte getaktete Ladestromquelle 7 besitzt einen eingangsseitig mit der Steuerung 15 verbundenen PWM-Generator, welcher mittels pulsweitenmodulierter Ausgangssignale alternierend zwei Halbleiterschalter 71,72 ansteuert, so daß alternierend der Halbleiterschalter 71 und der Halbleiterschalter 72 elektrisch stromdurchlässig werden. Über die vorgenannten Haltleiterschalter 71 und 72 werden jeweils Primärwicklungszweige 73 und 74 eines Transformators bzw. Übertragers abwechselnd mit den Anschlüssen 75 und 76 für die elektrische Versorgungsspannung der Ladestromquelle 7 verbunden, so daß in der Sekundärwicklung 77 ein Stromstoß der einen bzw. anderen Polarität erzeugt wird. Über einen nachgeschalteten Gleichrichter 78 ist die Sekundärwicklung 77 mit dem Zündkondensator 8 verbunden.

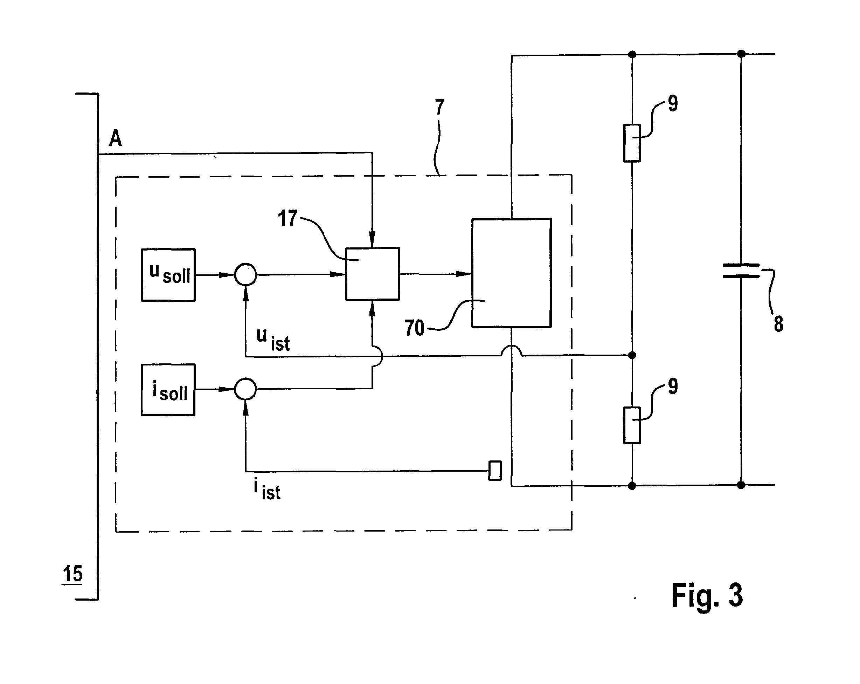

Bei der in Fig. 3 beispielhaft dargestellten geregelten Ladestromquelle 7 werden innerhalb der Ladestromquelle 7 Sollwertsignale i_{Soll} und u_{Soll} für die Stromstärke des Ladestromes sowie den Endwert der die Spannung des Zündkondensators erzeugt. In einer ersten Regelstrecke wird das Strom-Sollwertsignal i_{Soll} mit dem von einem entsprechenden Sensor gelieferten Strom-Istwertsignal i_{Ist} verglichen. Damit kann einem Regler 17 ein mit der Soll-Istwert-Differenz des Ladestromes korreliertes Signal zugeführt werden. In einer zweiten Regelstrecke wird das Spannungs-Sollwertsignal u_{Soll} mit dem zwischen den Widerständen 9 abgegriffenen Spannungs-Istwertsignal u_{Ist} vergleichen, so daß dem Regler 17 ein mit der Soll-Istwert-Differenz der Spannung des Zündkondensators 8 korreliertes Signal zugeführt werden kann.

Des weiteren erhält der Regler 17 das gegebenenfalls von der Steuerung 15 erzeugte Abschaltsignal A.

In Abhängigkeit von den zugeführten Signalen steuert dann der Regler 17 den PWM-Generator 70, so daß im Ergebnis der Zündkondensator 8 parameterabhängig aufladbar ist.

## Patentansprüche

1. Elektrische Schaltungsanordnung zur Erzeugung von Zündimpulsen für Schweißlichtbögen, mit
- einer Zündkapazität (8),
- einer damit über einen Ladestromkreis elektrisch verbundenen, durch Abschaltsignal abschaltbaren oder auf vernachlässigbaren Ausgangsstrom abregelbaren Ladestromquelle (7), die bei fehlendem Abschaltsignal und/oder Unterschreitung eines Schwellwertes der elektrischen Spannung der Zündkapazität (8) einen Ladestrom zur Zündkapazität (8) leitet,
- einer durch Auslösesignal auslösbaren Entladeschaltung (1o bis 13), über die die Zündkapazität (8) unter Einkopplung ihres Entladestromes in einen Schweißausgang eines Schweißgerätes (1 bis 3) entladbar ist, und
- einer gegenüber Rückwirkungen vom Ladestromkreis bzw. Entladestrom geschützten bzw. sicheren Steuerung (15), die in Abhängigkeit von vorgegebenen Parametern eines Schweißprozesses das Auslösesignal erzeugt,
**dadurch gekennzeichnet,**
**daß** die Steuerung (15) zu von den Parametern des Schweißprozesses abhängigen Zeitpunkten nach dem Auslösesignal und/oder dem Einsetzen des Ladestromes, spätestens bei Erzeugung des nächstfolgenden Auslösesignales, zur Beendigung der Aufladung der Zündkapazität (8) das Abschaltsignal einschaltet.

2. Schaltungsanordnung nach Anspruch 1,
**dadurch gekennzeichnet,**
**daß** die Ladestromquelle (7) bei Erreichen eines oberen Schwellwertes der elektrischen Spannung des Zündkondensators (8) den Ladestrom durch automatische Selbstabschaltung regelt.

3. Schaltungsanordnung nach Anspruch 2,
**dadurch gekennzeichnet,**
**daß** die Steuerung (15) jeweils bei Betriebsbeginn bzw. vorgebbaren Betriebsphasen vor Erzeugung eines Abschaltsignales die Zeit bis zur automatischen Selbstabschaltung der Ladestromquelle (7) als maximale Ladezeit registriert bzw. speichert und nachfolgend die auf ein Einsetzen des Ladestromes folgenden Abschaltsignale jeweils nach einem Zeitintervall erzeugt, welches gegenüber der maximalen Ladezeit um einen durch die Parameter vorgegebenen Anteil verkürzt ist.

4. Schaltungsanordnung nach einem der Ansprüche 1 bis 3,
**dadurch gekennzeichnet,**
**daß** die Ladestromquelle (7) als Konstantstromquelle ausgebildet ist.

5. Schaltungsanordnung nach einem der Ansprüche 1 bis 4,
**dadurch gekennzeichnet,**
**daß** die Ladestromquelle (7) einen gepulsten Ladestrom erzeugt.

6. Schaltungsanordnung nach einem der Ansprüche 1 bis 5,
**dadurch gekennzeichnet,**
**daß** die Steuerung (5) gegenüber Rückwirkungen des Ladestromkreises bzw. Entladestromes durch Entfernung oder galvanische Trennung vom Ladestromkreis geschützt ist.

7. Schaltungsanordnung nach einem der Ansprüche 1 bis 6,
**dadurch gekennzeichnet,**
**daß** die Steuerung (15) als programmierbare, digitale, mikroelektronische Steuerung ausgebildet ist.

8. Schaltungsanordnung nach einem der Ansprüche 1 bis 7,
**dadurch gekennzeichnet,**
**daß** am Ladestromkreis ein optoelektrischer Wandler (16) angeordnet ist, dessen vom Ladestromkreis galvanisch getrennter Signalausgang mit der Eingangsseite der Steuerung (15) verbunden ist und Signale überträgt, die oberhalb und unterhalb eines geringen Schwellwertes des Ladestroms unterschiedlich sind.
